# EUROPÄISCHE PATENTSCHRIFT

(11) **EP 0 616 877 B1**
(45) Veröffentlichungstag und Bekanntmachung des Hinweises auf die Patenterteilung: **08.10.1997**
(21) Anmeldenummer: 94103875.4
(22) Anmeldetag: 12.03.1994
(51) Int. Cl.: B29B 7/74

(54) **Verfahren zur Herstellung von Kautschukmischungen**
Method for making rubber mixtures
Procédé pour la fabrication de mélange de caoutchouc

(30) Priorität: 24.03.1993 DE 4309451
(43) Veröffentlichungstag der Anmeldung: 28.09.1994
(73) Patentinhaber: Continental Aktiengesellschaft, 30165 Hannover (DE); Peter, Julius, Dr., 1130 Wien (AT)
(72) Erfinder: Peter, Julius, Dr., A-1130 Wien (AT)
(74) Vertreter: Depmeyer, Lothar

(56) Entgegenhaltungen:
- US-A- 1 449 930
- US-A- 1 923 027
- US-A- 2 573 825
- PATENT ABSTRACTS OF JAPAN vol. 9, no. 132 (M-385)(1855) 7. Juni 1985 & JP-A-60 015 110 (KOBE SEIKOSHO)
- PATENT ABSTRACTS OF JAPAN vol. 14, no. 307 (M-993)3. Juli 1990 & JP-A-02 102 006 (HITACHI)

## Beschreibung

Die Erfindung betrifft ein Verfahren zur Herstellung von Kautschukmischungen, bei dem in einer ersten Stufe in einem Stempelkneter aus Kautschuk und nicht reaktiven Zusatzstoffen chargenweise eine Grundmischung hergestellt und die Grundmischung ohne Zwischenlagerung in einer zweiten Stufe unter Zufügen von reaktiven Zusatzstoffen in einem stempellosen Kneter ebenfalls chargenweise bei verringerter Temperatur fertig gemischt wird.

Es ist bei zweistufigen Kautschukmischverfahren bekannt (Patent Abstracts of Japan, vol. 14, no. 307, (M993) (1990) & JP-A-02102006), für den Kneter der zweiten Stufe einen Extruder zu benutzen, der von einem der ersten Stufe nachgeschalteten Strainer gefüttert wird, wobei zwischen dem Strainer und dem Extruder die Kautschukmischung gekühlt wird.

Demgegenüber geht die Erfindung von dem eingangs erwähnten Verfahren aus, bei dem zur Herstellung der Fertigmischung für die zweite Stufe des Verfahrens ein stempelloser Kneter benutzt wird, dem in üblicher Weise eine Charge zugeführt wird, die nach ihrer Behandlung insgesamt wieder abgeführt wird. Bei diesem Verfahren reicht die im stempellosen Kneter bewirkte Abkühlung im Regelfalle aus, um die Grundmischung unterhalb der Scorch-Zeitgrenze abzukühlen und zudem noch die reaktiven Stoffe in der Zykluszeit homogen zu verteilen. Die Arbeitszyklen des Grundmischers einerseits und des Fertigmischers andererseits sind also aufeinander abstimmbar.

Bei besonders grossen Mischaggregaten und/oder bei zähen oder sehr schnell vernetzenden Mischungen z.B. bei Haftmischungen für Metalle, kann sich jedoch die Schwierigkeit ergeben, dass das Abkühlen und Fertigmischen im Vergleich zum Grundmischen längere Zeit in Anspruch nimmt. Unter diesen Voraussetzungen ist eine Wirtschaftlichkeit des Chargenbetriebes nicht mehr gegeben.

Diese Nachteile sollen durch die Erfindung beseitigt werden; demgemäss strebt die Erfindung ein Verfahren an, dass eine Anpassung der Zyklen beim Grund- und Fertigmischen auch dann sicherstellt, wenn die oben erwähnten besonderen Bedingungen vorliegen.

Diese Aufgabe wird durch die Merkmale nach dem Kennzeichnungsteil des Patentanspruchs 1 gelöst, wobei zweckmässigerweise eine solche Abkühlung des Stranges erfolgt, dass er eine Temperatur von etwa 70 - 90°C aufweist und mit einer Temperatur ebenfalls von etwa 70 - 90°C dem stempellosen Keneter zugeführt wird. Der Strang wird also im noch warmen Zustand an den stempellosen Kneter übersteht und ist dementsprechend gut weiterverarbeitbar.

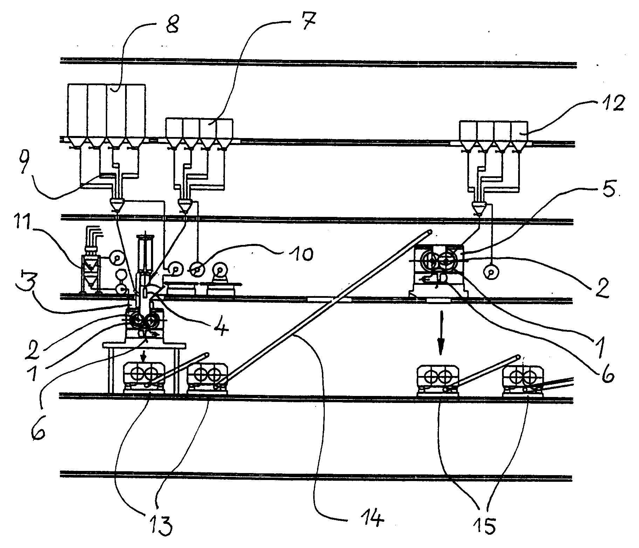

Weitere Einzelheiten der Erfindung werden anhand der Zeichnung erläutert, in der eine in einem mehrstöckigen Gebäude untergebrachte Mischeinrichtung schematisch dargestellt ist.

Die beiden Hauptelemente der Mischeinrichtung sind zwei sog. Innenmischer mit in einer Mischkammer 1 angeordneten Rotoren 2. Der Grundmischer 3 ist dabei ein mit Stempel 4 ausgerüsteter Kneter, während der Fertigmischer 5 ein stempelloser Kneter ist, der also von oben frei zugänglich ist, jedoch wie der Grundmischer 3 unten einen klappbaren Sattel 6 zum Entleeren aufweist.

Dem Grundmischer 3 sind mehrere Hilfseinrichtungen zugeordnet, nämlich Chemikalienbehälter 7, Füllstoffbehälter 8, Dosier- und Verwiegeinrichtungen 9, Kautschukbereitstellungen 1o sowie Öldosierer 11. Dem Fertigmischer 5 ist indessen eine Zugabeeinrichtung 12 für Chemikalien zugeordnet.

Unterhalb des Grundmischers 3 befinden sich Walzwerke 13, denen sich ein Förderband 14 mit nicht näher dargestellten Wasserkühleinrichtungen anschliesst, das zum Schlund des Fertigmischers 5 führt, unter dem sich auch seinerseits Walzwerke 15 befinden, die zur Weiterverarbeitungseinrichtungen z.B. eine Batch-Off-Anlage führen können.

Nachdem im Grundmischer 3 die Grundmischung erstellt wurde, fällt die Charge mit einer Temperatur von etwa 130 - 190° C auf ein Walzwerk 13, auf dem zusammen mit dem anderen Walzwerk 13 die Grundmischung zu einem Band mit flach rechteckigem Querschnitt geformt wird, das dem Föderband 14 zugeleitet wird. Während des Förderns wird das Mischungsband durch Berieseln mit oder Eintauchen in Wasser in der Weise behandelt, dass das Mischungsband auf eine Temperatur von etwa 7o - 90° C abgekühlt wird. Diese Wasserbehandlung erfolgt in der Weise, dass aufgrund des Einflusses des Mischungsstrangs das Wasser verdunstet und durch die Verdunstungswärme das Mischungsband getrocknet wird, um das Band im trockenen, aber noch warmen Zustand dem stempellosen Kneter 5 zuführen zu können.

Ist im Fertigmischer 5 eine Charge zusammengetragen, erfolgt das Fertigmischen unter Nutzung der Zugabeeinrichtung 12, wenngleich auch der Zyklus des Fertigmischens bereits vor Erreichen der Chargenmenge beginnen kann.

Demgemäss verringert sich die Zykluszeit des Fertigmischens, da dem Fertigmischer 5 eine bereits zumindest vorgekühlte Masse zugeführt wird. Dementsprechend passt sich der Zyklus des Fertigmischens an denjenigen des Grundmischens an.

## Patentansprüche

1. Verfahren zur Herstellung von Kautschukmischungen, bei dem in einer ersten Stufe in einem Stempelkneter aus Kautschuk und nicht reaktiven Zusatzstoffen chargenweise eine Grundmischung hergestellt und die Grundmischung ohne Zwischenlagerung in einer zweiten Stufe unter Zufügen von reaktiven Zusatzstoffen in einem stempellosen Kneter ebenfalls chargenweise bei verringerter Temperatur fertig gemischt wird, dadurch gekennzeichnet, dass die Grundmischung nach dem Verlassen des Grundmischers zu einem Strang mit einem flach rechteckigen Querschnitt geformt, auf etwa 50 - 100° C mit Wasser abgekühlt wird in der Weise, dass die in der Mischung enthaltene Wärme ausreicht, um das Mischgut im Verlaufe des Transportes zum stempellosen Kneter zu trocknen, und dass der Strang im noch warmen Zustand mit einer Temperatur von etwa 50 - 100° C dem stempellosen Kneter zugeführt wird.

2. Verfahren nach Anspruch 1, dadurch gekennzeichnet, dass der Strang auf etwa 70 - 90° C abgekühlt wird.

3. Verfahren nach Anspruch 1, dadurch gekennzeichnet, dass der Strang mit einer Temperatur von etwa 70 - 90° C dem stempellosen Kneter zugeführt wird.

4. Verfahren nach Anspruch 1, dadurch gekennzeichnet, dass die Formung zu einem Strang durch eine oder mehrere unmittelbar unterhalb des Stempelkneters befindliche, unmittelbar vom Stempelkneter beschickte Walzwerke, Extruder od. dgl. erfolgt.

## Claims

1. Method of producing rubber mixtures, wherein, in a first stage, a master batch is chargewisely produced in a ram-type masticator from rubber and non-reactive additional substances, and the master batch is also ready-mixed chargewisely at a reduced temperature without being interposed in a second stage by adding reactive additional substances, characterised in that, after leaving the master batch mixer, the master batch is shaped to form an extruded body, which has a gently rectangular cross-section, in that said master batch is cooled with water to approximately 50 - 100° C in such a manner that the heat contained in the mixture is sufficient to dry the material to be mixed as it travels to the ramless masticator, and in that the extruded body is supplied to the ramless masticator in its still warm state with a temperature of approximately 50 - 100° 0.

2. Method according to claim 1, characterised in that the extruded body is cooled to approximately 70 - 90° C.

3. Method according to claim 1, characterised in that the extruded body is supplied to the ramless masticator with a temperature of approximately 70 - 90° C.

4. Method according to claim 1, characterised in that the shaping to form an extruded body is effected by one or more rolling mills, extruders or the like, which are situated directly beneath the ram-type masticator and are loaded directly from the ram-type masticator.

## Revendications

1. Procédé pour la préparation de mélanges de caoutchouc dans lequel, dans une première étape, on prépare en discontinu, dans un malaxeur à piston, à partir de caoutchouc et d'additifs non réactifs, un mélange de base et dans une deuxième étape, on effectue le mélange final avec addition d'additifs réactifs, également en discontinu, dans un malaxeur sans piston, à une température plus basse, caractérisé en ce que le mélange de base, après avoir quitté le mélangeur de base, est transformé en un boudin dont la section transversale est plane et rectangulaire, et refroidi avec de l'eau aux environs de 50 à 100 °C de telle manière que la chaleur contenue dans le mélange suffise pour sécher la matière mélangée au cours du transport au malaxeur sans piston, et en ce que le boudin est envoyé au malaxeur sans piston à l'état encore chaud à une température d'environ 50 à 100 °C.

2. Procédé selon la revendication 1, caractérisé en ce que le boudin est refroidi aux environs de 70 à 90 °C.

3. Procédé selon la revendication 1, dans lequel le boudin est envoyé au malaxeur sans piston à une température d'environ 70 à 90 °C.

4. Procédé selon la revendication 1, caractérisé en ce que la transformation en boudin s'effectue par un ou plusieurs malaxeurs à cylindres, extrudeuses, etc. alimentés directement par le malaxeur à piston se trouvant juste au-dessous du malaxeur à piston.
